# EUROPÄISCHE PATENTSCHRIFT

(11) **EP 0 694 725 B1**
(45) Veröffentlichungstag und Bekanntmachung des Hinweises auf die Patenterteilung: **08.11.2000**
(21) Anmeldenummer: 95110192.2
(22) Anmeldetag: 30.06.1995
(51) Int. Cl.: F16L 33/02

(54) **Federbandschelle**
Flat spring clamp
Collier de serrage en forme de bande

(30) Priorität: 11.07.1994 DE 4424046
(43) Veröffentlichungstag der Anmeldung: 31.01.1996
(73) Patentinhaber: Steinkönig, Uwe, 55276 Oppenheim (DE)
(72) Erfinder: Steinkönig, Uwe, 55276 Oppenheim (DE)
(74) Vertreter: Patentanwälte Gesthuysen, von Rohr, Weidener, Häckel

(56) Entgegenhaltungen:
- EP-A- 0 303 505
- DE-A- 4 305 649
- GB-A- 1 560 606
- GB-A- 2 266 120

## Beschreibung

Die Erfindung betrifft eine Federbandschelle mit einem Federband, zwei vom Federband abstehenden Spannenden und einem die Spannenden fixierenden und dabei einen aufgespreizten Montagezustand der Federbandschelle gewährleistenden, als separates Bauteil ausgebildeten Halteelement, wobei das Halteelement einen Halteabschnitt und einen Abziehabschnitt aufweist, wobei nach Abziehen oder Lösen des Halteelements die Federbandschelle in ihren im wesentlichen entspannten Klemmzustand federt, wobei der Abziehabschnitt des Halteelements einen Griffabschnitt zum manuellen Abziehen bzw. Lösen des Halteelemtes aufweist und wobei der Halteabschnitt als etwa U-förmige Klammer mit zwei Fixierschenkeln zum Übergreifen und Fixieren der Spannenden im Montagezustand ausgebildet ist.

Eine Federbandschelle der zuvor genannten Art geht bereits aus der DE - U - 92 12 200 hervor. Bei dieser bekannten Federbandschelle wird das Halteelement mittels eines in eine Öffnung des Abziehabschnittes eingreifenden Werkzeuges von den Spannenden abgezogen. Die Öffnung im Abziehabschnitt des Halteelements ist von ihrer Größe und Ausbildung her nicht dazu geeignet und vorgesehen, daß mit einem Finger darin eingegriffen werden kann. Zwar ist es grundsätzlich möglich, den Abziehabschnitt als Griffabschnitt zu verwenden und mit zwei Fingern zu greifen. Aufgrund der hohen Reibkräfte zwischen dem Halteelement und den Spannenden im Montagezustand der Federbandschelle ist es jedoch ausgeschlossen, das Halteelement ohne ein Werkzeug abzuziehen.

Die vorliegende Erfindung betrifft weiterhin eine Federbandschelle mit einem Federband, zwei vom Federband abstehenden Spannenden und einem die Spannenden fixierenden und dabei einen aufgespreizten Montagezustand der Federbandschelle gewährleistenden, einteilig mit der Federbandschelle ausgebildeten Halteelement, wobei das Halteelement einen Halteabschnitt und einen Abziehabschnitt aufweist, wobei nach Abziehen oder Lösen des Halteelements die Federbandschelle in ihren im wesentlichen entspannten Klemmzustand federt, wobei der Abziehabschnitt des Halteelements einen Griffabschnitt zum manuellen Abziehen oder Lösen des Halteelements aufweist und wobei das Halteelement mit dem zweiten Spannende verbunden und von diesem in Richtung auf das erste Spannende abgebogen ist.

Eine Federbandschelle der zuvor beschriebenen Art ist bereits aus der EP - A - 303 505 bekannt. Auch bei dieser bekannten Federbandschelle ist zum Abziehen des Halteelements ein Werkzeug erforderlich, wie dies beispielsweise in Fig. 10 der EP - A - 303 505 dargestellt ist. Nachteilig bei dem vorgenannten Stand der Technik ist es, daß das Abziehen bzw. Lösen des Halteelements an schlecht zugänglichen Stellen im Motorraum mit Hilfe der erwähnten Zangen bzw. Spezialwerkzeuge nur schwer, zum Teil sogar gar nicht möglich ist.

Aufgabe der vorliegenden Erfindung ist es daher, Federbandschellen der zuvor genannten Art zur Verfügung zu stellen, bei denen das Halteelement auch an mit einer Zange oder einem Spezialwerkzeug schlecht zugänglichen Stellen im Motorraum in einfacher Weise abgezogen werden kann.

Die zuvor beschriebene Aufgabe ist bei einer Federbandschelle mit den Oberbegriffsmerkmalen des Patentanspruchs 1 dadurch gelöst, daß der Griffabschnitt eine Wölbung zum Eingreifen in den Griffabschnitt oder Untergreifen des Griffabschnitts mittels wenigstens eines Fingers aufweist und daß ein Fixierschenkel mit seiner Unterkante auf dem Federband aufsitzt, so daß sich ein vorgegebener Drehpunkt beim Abziehen des Halteelements ergibt.

Bei der im Oberbegriff des Patentanspruchs 2 angegebenen Federbandschelle ist zur Lösung der zuvor beschriebenen Aufgabe vorgesehen, daß der Griffabschnitt eine Wölbung zum Eingreifen in den Griffabschnitt oder Untergreifen des Griffabschnitts mittels wenigstens eines Fingers aufweist und daß zwischen dem Halteelement und dem zweiten Spannende eine Sollbruchstelle vorgesehen ist.

Bei den erfindungsgemäßen Ausgestaltungen ist es aufgrund der am Griffabschnitt vorgesehenen Wölbung möglich, das Halteelement von Hand, also ohne ein Werkzeug abzuziehen, und zwar auch an solchen Stellen innerhalb des Motorraums, die mit einer Zange oder einem Spezialwerkzeug schlecht zugänglich, aber per Hand noch zu erreichen sind. Das einfache Abziehen des Halteelements per Hand wird bei der im Patentanspruch 1 angegebenen Alternative dadurch verwirklicht, daß der eine Fixierschenkel beim Abziehen auf dem Federband aufsitzt, wodurch sich eine gute Hebelwirkung ergibt. Dadurch werden die Kräfte, die zum Abziehen erforderlich sind, verringert. Bei der Patentanspruch 2 angegebenen Ausführungsform ergibt sich durch die Sollbruchstelle ein vorgegebener Schwenkpunkt beim Abziehen bzw. Lösen des Halteelements, wobei ebenfalls nur geringe Kräfte beim Abziehen bzw. Lösen erforderlich sind. Darüber hinaus ergibt sich bei dieser erfindungsgemäßen Alternative aufgrund der Einteiligkeit der Federbandschelle mit dem Halteelement nicht nur eine leichte Herstellung, sondern auch eine einfache Vorfertigung beim Spannen der Federbandschelle.

Bevorzugte Ausgestaltungen der erfindungsgemäßen Federbandschellen ergeben sich aus den Unteransprüchen. Nachfolgend werden bevorzugte Ausführungsbeispiele der vorliegenden Erfindung anhand der Zeichnung erläutert. Es zeigt
- Fig. 1: eine perspektivische Ansicht einer ersten Ausführungsform der erfindungsgemäßen Federbandschelle im Montagezustand,
- Fig. 2: eine Seitenansicht der Federbandschelle aus Fig. 1,
- Fig. 3: eine Seitenansicht eines Halteelements der in Fig. 1 dargestellten Federbandschelle,
- Fig. 4: eine perspektivische Darstellung einer zweiten Ausführungsform der erfindungsgemäßen Federbandschelle im Montagezustand,
- Fig. 5: eine Seitenansicht der Federbandschelle aus Fig. 4 und
- Fig. 6: eine Seitenansicht der Federbandschelle aus Fig. 4 im Klemmzustand mit abgetrenntem Halteelement.

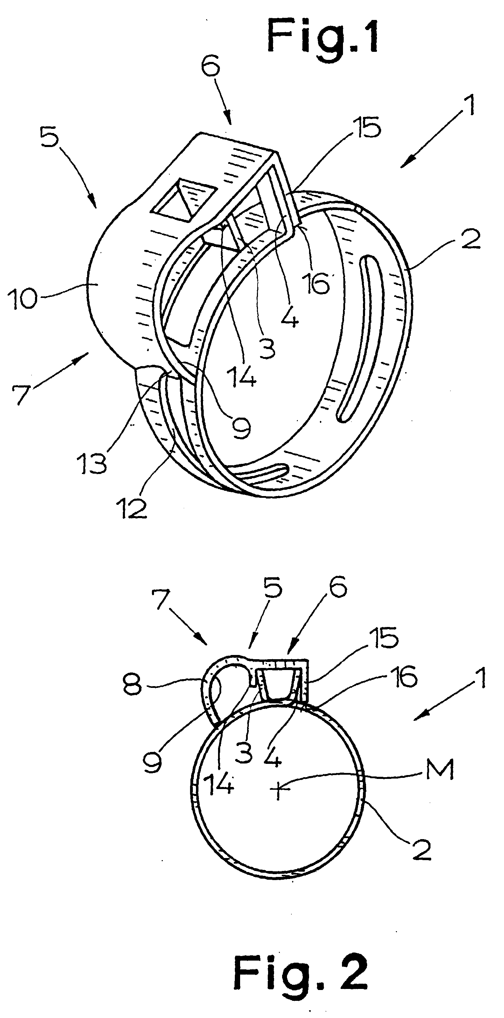

In den Fig. 1 und 2 einerseits und 4 bis 6 andererseits sind unterschiedliche Ausführungsformen einer erfindungsgemäßen Federbandschelle 1 dargestellt. Die folgenden Ausführungen gelten zunächst für beide Ausführungsformen, auf Unterschiede wird jeweils hingewiesen.

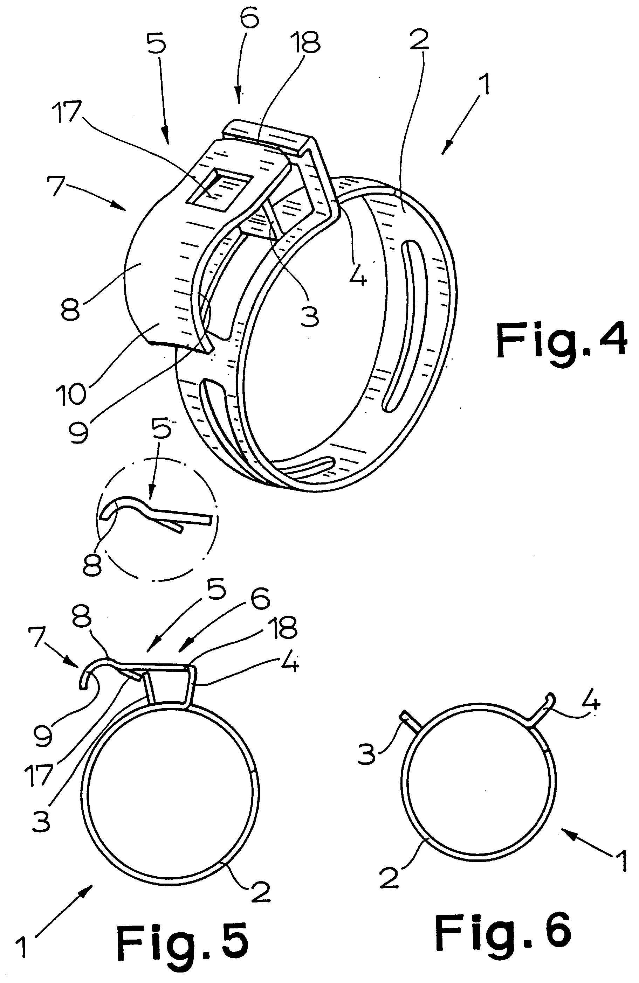

Die Federbandschelle 1 weist ein Federband 2 auf, das an seinen Enden zwei vom Federband 2 abstehende Spannenden 3, 4 aufweist. Die Spannenden 3, 4 verlaufen etwa radial zur Mittelachse M der Federbandschelle 1. Bis auf die in Fig. 6 gezeigte Federbandschelle 1 befinden sich alle übrigen gezeigten Federbandschellen 1 in einem aufgespreizten Zustand, der im folgenden als Montagezustand bezeichnet wird. Im Montagezustand sind die Spannenden 3, 4 durch ein Halteelement 5 fixiert. Das Halteelement 5 wiederum weist einen Halteabschnitt 6 und einen Abziehabschnitt 7 auf. Der Halteabschnitt 6 dient dabei zum Zusammenhalten bzw. Fixieren der Spannenden 3, 4 im Montagezustand, während der Abziehabschnitt 7 zum Angriff der Abziehkraft und zum Abziehen des Halteelements 5 dient. Der entspannte Zustand, der im folgenden als Klemmzustand bezeichnet wird, wird nach Abziehen bzw. Lösen des Halteelements 5 erreicht, wobei die Fixierung der Spannenden 3, 4 aufgehoben wird und die Federbandschelle 1 in ihren Klemmzustand federn kann.

Wesentlich ist nun für beide Ausführungsformen, daß der Abziehabschnitt 7 des Halteelements 5 einen zum Eingreifen oder Untergreifen mittels wenigstens eines Fingers ausgebildeten Griffabschnitt 8 zum manuellen Abziehen des Halteelements 5 aufweist. Durch entsprechend ergonomische Ausbildung des Griffabschnittes 8 wird also ein manuelles Abziehen des Halteelements 5 möglich, ohne daß noch spezielle Handhabungswerkzeuge erforderlich wären. Hierdurch kann die Federbandschelle 1 auch an Stellen, die mit einem Handhabungswerkzeug schlecht zugänglich sind, ohne weiteres durch Abziehen bzw. Lösen des Halteelements 5 entspannt bzw. geklemmt werden.

Besonders zweckmäßig ist es, wenn der Griffabschnitt 8 im Montagezustand der Federbandschelle 1 in bezug auf das oder die zu lösenden Spannenden 3, 4 außermittig angeordnet ist. Hierdurch ergibt sich dann beim Abziehen bzw. Lösen des Halteelementes 5 von dem oder den Spannenden 3, 4 eine Hebelwirkung, so daß letztlich die erforderlichen Abziehkräfte verringert sind. In den dargestellten Ausführungsbeispielen ist der Griffabschnitt 8 benachbart den Spannenden 3, 4 angeordnet und als Fingerbügel zum Untergreifen mittels eines Fingers ausgebildet. Durch diese Anordnung des Griffabschnitts benachbart den Spannenden wird der wirksame Hebel zum Abziehen bzw. Lösen des Halteelements 5 weiter vergrößert, so daß die erforderlichen Abziehkräfte noch weiter verringert sind. Der Griffabschnitt 8 läuft dabei vorzugsweise tangential und/oder bogenförmig zum Federband 2. Es versteht sich, daß sich der Griffabschnitt 8 auch in radialer Richtung erstrecken und beispielsweise eine Schlaufenform aufweisen kann. Bei dieser Ausführungsform nimmt die Federbandschelle 1 einschließlich Halteelement 5 jedoch in radialer Richtung relativ viel Platz ein. Damit sich beim Abziehen des Halteelements 5 von den Spannenden 3, 4 zum Lösen der Federbandschelle 1 eine geringe Fingerbelastung ergibt, ist weiterhin vorgesehen, daß der Griffabschnitt 8 eine einer Fingerform angepaßte Wölbung 9 aufweist. Somit ergibt sich beim Abziehen über die gesamte Wölbung 9 eine gute Kräfteverteilung.

Der Griffabschnitt 8 weist aber nicht nur über einen Teil seiner Länge eine Wölbung 9 auf, sondern auch eine sich über seine Breite erstreckende weitere Wölbung 10, die nach innen gewölbt ist, wodurch sich eine noch bessere Kräfteverteilung und geringere Fingerbelastung beim Abziehen ergibt. Der Griffabschnitt 8 selbst ist also im Hinblick auf den manuellen Fingerabzug ergonomisch ausgebildet, wobei die Breite des Griffabschnittes 8 um ein Mehrfaches größer ist als seine Dicke. Im dargestellten Ausführungsbeispiel entspricht die Breite des Griffabschnittes 8 etwa der Breite des Federbandes 2

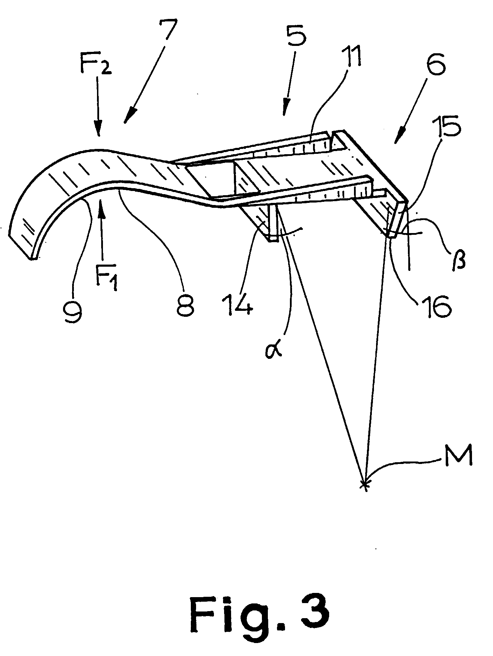

Der Griffabschnitt 8 weist zumindest an einer Seite eine nur in Fig. 3 dargestellte Umkantung 11 auf, so daß sich eine höhere Steifigkeit ergibt und nicht die Gefahr besteht, daß der Griffabschnitt 8 beim Abziehen bzw. Lösen umbiegt. Statt der erwähnten Umkantung 11, die vorzugsweise an beiden äußeren Seiten des Griffabschnitts 8 vorgesehen ist, kann selbstverständlich auch eine Härtung des Griffabschnitts 8 vorgesehen sein, was verfahrenstechnisch jedoch aufwendiger ist. Um nicht die Ergonomie des Griffabschnitts 8 im Bereich der Wölbung 9 zu beeinträchtigen, reicht es an sich aus, daß die Umkantung im Übergangsbereich des Halteabschnitts 6 zum Griffabschnitt 8 realisiert wird, da sich an dieser Stelle der kritische Punkt befindet, an dem üblicherweise die Umbiegung stattfindet.

Beim Transport und/oder beim Einbau der Federbandschelle 1 können Störkräfte auftreten, die zu einem unbeabsichtigten Lösen des Montagezustandes führen können. Um sicherzustellen, daß in Richtung der Mittelachse M wirkende Störkräfte nicht zu einem unbeabsichtigten Lösen führen, ist vorgesehen, daß der Griffabschnitt 8 derart mit dem Federband 2 zusammenwirkt, daß der Griffabschnitt 8 seitlich, also in Richtung der Mittelachse M fixiert ist. Bei dem in den Fig. 1 und 2 dargestellten Ausführungsbeispiel ist zur seitlichen Fixierung im Federband 2 wenigstens eine Öffnung 12 vorgesehen, in die ein am Griffabschnitt 8 vorgesehener Vorsprung 13 im Montagezustand eingreift. Die Öffnung 12 dient also (unter anderem) zur Realisierung eines Formschlusses zwischen dem Federband 2 und dem Griffabschnitt 8 in Richtung der Mittelachse M.

Obwohl bei der in den Fig. 4 bis 6 dargestellten Ausführungsform keine in Richtung der Mittelachse M wirkende Fixierung zwischen Griffabschnitt 8 und Federband 2 dargestellt ist, versteht es sich, daß auch bei dieser Ausführungsform die vorgenannte Art der Fixierung realisiert werden kann.

Bei der in den Fig. 1 und 2 dargestellten Ausführungsform, auf die im folgenden Bezug genommen wird, ist das Halteelement 5 als separates Bauteil ausgebildet. Die Ausbildung des Halteelements 5 als separates Bauteil ermöglicht die Wiederverwertung, wenn das Halteelement nach dem Abziehen wieder an den Hersteller zurückgegeben wird. Der Halteabschnitt 6 des Halteelements 5 ist bei dieser Ausführungsform als etwa U-förmige Klammer zum Übergreifen und Fixieren der Spannenden 3, 4 im Montagezustand ausgebildet. Die Klammer weist einen dem Griffabschnitt 8 nahen ersten Fixierschenkel 14 und einen dem Griffabschnitt 8 fernen zweiten Fixierschenkel 15 auf. Bei dem ersten Fixierschenkel 14 handelt es sich um eine aus dem Material des Halteelements 5 ausgestanzte und abgebogene Lasche. Aufgrund der U-förmig ausgebildeten Klammer ist jedenfalls eine sichere Fixierung der Spannenden 3, 4 im Montagezustand möglich. Der zweite Fixierschenkel 15 sitzt mit seiner Unterkante 16 auf dem Federband 2 auf. Hierdurch ergibt sich zum einen ein vorgegebener Drehpunkt beim Abziehen (Schwenken) des Halteelements 5 und zum anderen ein relativ großer Hebelarm.

Bei der Anordnung des ersten Fixierschenkels 14 zum korrespondierenden etwa radial verlaufenden Spannende 3 bedarf es im Hinblick auf die erforderliche Abziehkraft einerseits und einer in gleicher Richtung wie die Abziehkraft wirkenden Störkraft F₁ einer Optimierung. Grundsätzlich sollte der erste Fixierschenkel 14 so angeordnet sein, daß die Abziehkraft minimiert wird, diese Kraft jedoch nicht so klein ist, daß die erwähnte in gleicher Richtung wirkende Störkraft F₁ die Federbandschelle 1 auslöst. Mit der erwähnten Vorgabe ist es einem Fachmann ohne weiteres möglich, die entsprechende Anordnung bzw. Winkelstellung des ersten Fixierschenkels 14 zum korrespondierenden Spannende 3 zu optimieren. Dabei sollte der aus Fig. 3 ersichtliche Winkel α so klein wie möglich, jedoch im Hinblick auf die obigen Ausführungen nicht zu klein sein. α stellt dabei den Winkel zwischen dem Radius der Federbandschelle 1 und dem ersten Fixierschenkel 14 dar.

Gleiches gilt für die Anordnung und Ausbildung des zweiten Fixierschenkels 15. Hierbei sollte der Winkel β zwischen der Innenseite des zweiten Fixierschenkels 15 und der Außenseite des korrespondierenden Spannendes 4 gemessen von der Unterkante 16 des zweiten Fixierschenkeis im Rahmen der Möglichkeiten vergleichsweise groß gewählt werden, damit sich eher eine linienförmige Anlage der Unterkante 16 als eine flächige Anlage des zweiten Fixierschenkels 15 an das Spannende 4 ergibt. Hierdurch wird eine hohe Flächenpressung erreicht. Die hohe Flächenpressung dient dazu, um zu verhindern, daß eine mögliche von oben auf den Griffabschnitt 8 wirkende Störkraft F₂ nicht zum unbeabsichtigten Auslösen der Federbandschelle 1 führt. Gleichzeitig sollte aber auch der Abstand zwischen den beiden Fixierschenkeln 14, 15 möglichst klein sein, damit es auch bei stärkerem Herabdrücken des Griffabschnitts 8 aufgrund des geringen Abstandes (kleiner Hebelweg) nicht zum unbeabsichtigten Auslösen kommt. Die Gefahr, daß die von oben auf den Griffabschnitt 8 wirkende Störkraft F₂ zum Auslösen der Federbandschelle 1 führt, ist jedoch dann besonders gering, wenn, wie dies in den Fig. 1 und 2 dargestellt ist, der Griffabschnitt 8 mit seinem freien Ende auf dem Federband 2 aufliegt.

Bei der in den Fig. 4 bis 6 dargestellten Ausführungsform ist das Halteelement 5 einteilig mit der Federbandschelle 1 ausgebildet. Aufgrund der Einteiligkeit ergibt sich nicht nur eine leichte Herstellung, sondern auch eine einfache Vorfertigung. Das Halteelement 5 ist dabei mit dem Spannende 4 verbunden und von diesem in Richtung auf das andere Spannende 3 abgebogen. Weiterhin weist das Halteelement 5 eine abgebogene Lasche 17 zum Hintergreifen des Spannendes 3 auf. Die Lasche 17 ist aus dem Material des Halteelements 5 ausgestanzt und in Richtung auf das Federband 2 abgebogen. Dabei ist die Lasche 17 nur mit einem geringen Winkel auf das Federband 2 hin abgebogen, was das Spannen der Federbandschelle 1 erleichtert. Der Griffabschnitt 8 weist an seinem dem Spannende 4 zugewandten Ende eine Sollbruchstelle 18 auf, die vorzugsweise als sich über die gesamte Breite des Griffabschnittes 8 erstreckende Einkerbung ausgebildet ist. An ihren Enden ist die Sollbruchstelle 18 noch eingeschnitten. Auch hierbei bedarf es einer entsprechenden Optimierung, um sicherzustellen, daß sich der Griffabschnitt 8 beim Abziehen von dem Spannende 4 löst. Bei dieser Ausführungsform ist das Spannende 4 etwa U-förmig ausgebildet, wobei sich an das Spannende 4 der Griffabschnitt 8 anschließt. Das andere Spannende 3 erstreckt sich durch das U-förmige Spannende 4 hindurch.

Das Spannen der erfindungsgemäßen Federbandschelle 1 erfolgt bei der in den Fig. 1 und 2 dargestellten Ausführungsform derart, daß die Federbandschelle 1 aus ihrem entspannten Zustand mit Hilfe eines Werkzeugs gespannt wird, wobei sich die Spannenden 3, 4 aufeinander zu bewegen. Über die dann benachbart zueinander angeordneten Spannenden 3, 4 wird dann das Halteelement 5 gesetzt und zwar derart, daß der Vorsprung 13 in die Öffnung 12 eingreift. Nach Aufsetzen des Halteelementes 5 befindet sich die Federbandschelle 1 im Montagezustand.

Bei der in den Fig. 4 bis 6 dargestellten Ausführungsform werden die Spannenden 3, 4 beim Spannen ebenfalls aufeinander zu bewegt. Das Spannende 3 läuft dabei solange entlang der geneigten Lasche 17, bis das Spannende 3 hinter der Lasche 17 einrastet. Die Federbandschelle 1 befindet sich dann ebenfalls im Montagezustand.

Das Abziehen bei der erstgenannten Ausführungsform erfolgt durch Eingreifen bzw. Untergreifen des Griffabschnitts 8 im Bereich der Wölbung 9 mit Hilfe eines Fingers. Das Halteelement 5 dreht dann bei entsprechender Kraftausübung um die Unterkante 16 als Drehpunkt, bis der erste Fixierschenkel 14 außer Eingriff mit dem Spannende 3 kommt. Sodann federt die Federbandschelle 1 in den Klemmzustand. Gleiches gilt für die zweite Ausführungsform, wobei das Halteelement 5 allerdings um die Sollbruchstelle 18 dreht. Kommt hierbei das Spannende 3 außer Eingriff mit der Lasche 17, federt die Federbandschelle 1 ebenfalls in den Klemmzustand. Die Sollbruchstelle 18 ist dabei derart ausgelegt, daß entweder schon unmittelbar nach dem Entrasten oder aber bei weiterer Schwenkbewegung des Griffabschnitts 8 des Halteelement 5 vom zweiten Fixierschenkel 15 abbricht.

## Patentansprüche

1. Federbandschelle mit einem Federband (2), zwei vom Federband (2) abstehenden Spannenden (3, 4) und einem die Spannenden (3, 4) fixierenden und dabei einen aufgespreizten Montagezustand der Federbandschelle (1) gewährleistenden, als separates Bauteil ausgebildeten Halteelement (5), wobei das Halteelement einen Halteabschnitt (6) und einen Abziehabschnitt (7) aufweist, wobei nach Abziehen oder Lösen des Halteelements (5) die Federbandschelle (1) in ihren im wesentlichen entspannten Klemmzustand federt, wobei der Abziehabschnitt (7) des Halteelements (5) einen Griffabschnitt (8) zum manuellen Abziehen bzw. Lösen des Halteelements (5) aufweist und wobei der Halteabschnitt (6) als etwa U-förmige Klammer mit zwei Fixierschenkeln (14, 15) zum Übergreifen und Fixieren der Spannenden (3, 4) im Montagezustand ausgebildet ist, **dadurch gekennzeichnet,** daß der Griffabschnitt (8) eine Wölbung (9) zum Eingreifen in den Griffabschnitt (8) oder Untergreifen des Griffabschnitts (8) mittels wenigstens eines Fingers aufweist und daß ein Fixierschenkel (15) mit seiner Unterkante (16) auf dem Federband (2) aufsitzt, so daß sich ein vorgegebener Drehpunkt beim Abziehen des Halteelements (5) ergibt.

2. Federbandschelle mit einem Federband (2), zwei vom Federband (2) abstehenden Spannenden (3, 4) und einem die Spannenden (3, 4) fixierenden und dabei einen aufgespreizten Montagezustand der Federbandschelle (1) gewährleistenden, einteilig mit der Federbandschelle (1) ausgebildeten Halteelement (5), wobei das Halteelement einen Halteabschnitt (6) und einen Abziehabschnitt (7) aufweist, wobei nach Abziehen oder Lösen des Halteelements (5) die Federbandschelle (1) in ihren im wesentlichen entspannten Klemmzustand federt, wobei der Abziehabschnitt (7) des Halteelements (5) einen Griffabschnitt (8) zum manuellen Abziehen bzw. Lösen des Halteelements (5) aufweist und wobei das Halteelement (5) mit dem zweiten Spannende (4) verbunden und von diesem in Richtung auf das erste Spannende (3) abgebogen ist, **dadurch gekennzeichnet,** daß der Griffabschnitt (8) eine Wölbung (9) zum Eingreifen in den Griffabschnitt (8) oder Untergreifen des Griffabschnitts (8) mittels wenigstens eines Fingers aufweist und daß zwischen dem Halteelement (5) und dem zweiten Spannende (4) eine Sollbruchstelle (18) vorgesehen ist.

3. Federbandschelle nach Anspruch 1 oder 2, dadurch gekennzeichnet, daß der Griffabschnitt (8) im Montagezustand der Federbandschelle (1) in Bezug auf das oder die zu lösenden Spannenden (3, 4) außermittig angeordnet ist.

4. Federbandschelle nach einem der Ansprüche 1 bis 3, dadurch gekennzeichnet, daß der Griffabschnitt (8) als benachbart den Spannenden (3, 4) benachbarter Fingerbügel ausgebildet ist, der vorzugsweise tangential und/oder bogenförmig zum Federband (2) verläuft.

5. Federbandschelle nach einem der Ansprüche 1 bis 4, dadurch gekennzeichnet, daß die Wölbung (9) der Form eines Fingers im wesentlichen angepaßt ist und sich zumindest über einen Teil der Länge des Griffabschnitts (8) erstreckt.

6. Federbandschelle nach einem der Ansprüche 1 bis 5, dadurch gekennzeichnet, daß der Griffabschnitt (8) eine sich im wesentlichen über die Breite des Griffabschnitts (8) erstreckende Wölbung (10) aufweist.

7. Federbandschelle nach einem der Ansprüche 1 bis 6, dadurch gekennzeichnet, daß die Breite des Griffabschnittes (8) um ein Mehrfaches größer ist als seine Dicke.

8. Federbandschelle nach Anspruch 7, dadurch gekennzeichnet, daß die Breite des Griffabschnittes (8) etwa der Breite des Federbandes (2) entspricht.

9. Federbandschelle nach einem der Ansprüche 1 bis 8, dadurch gekennzeichnet, daß der Griffabschnitt (8) zumindest an einer Längsseite eine Umkantung (11) aufweist.

10. Federbandschelle nach Anspruch 9, dadurch gekennzeichnet, daß die Umkantung (11) zumindest im Bereich des Übergangs vom Halteabschnitt (6) zum Abziehabschnitt (7) vorgesehen ist.

11. Federbandschelle nach einem der Ansprüche 1 bis 10, dadurch gekennzeichnet, daß der Griffabschnitt (8) derart mit dem Federband (2) zusammenwirkt, daß der Griffabschnitt (8) in Richtung der Mittelachse (M) der Federbandschelle (1) fixiert ist.

12. Federbandschelle nach einem der Ansprüche 1 bis 11, dadurch gekennzeichnet. daß im Federband (2) wenigstens eine Öffnung (12) vorgesehen ist, in die ein am Griffabschnitt (8) vorgesehener Vorsprung (13) im Montagezustand eingreift.

13. Federbandschelle nach einem der Ansprüche 1 und 3 bis 12, dadurch gekennzeichnet, daß einer der beiden Fixierschenkel der Klammer ein dem Griffabschnitt (8) naher erster Fixierschenkel (14) und der andere Fixierschenkel ein dem Griffabschnitt (8) ferner zweiter Fixierschenkel (15) ist.

14. Federbandschelle nach Anspruch 13, dadurch gekennzeichnet, daß der erste Fixierschenkel (14) in einem kleinen Winkel (α) zum ersten Spannende (3) geneigt angeordnet ist, so daß sich eine eher flächige Anlage als eine linienförmige Anlage des ersten Fixierschenkels (14) am ersten Spannende (3) ergibt.

15. Federbandschelle nach Anspruch 13 oder 14, dadurch gekennzeichnet, daß der zweite Fixierschenkel (15) in einem kleinen Winkel (β) zum korrespondierenden Spannende (4) angeordnet ist, so daß sich eine eher linienförmige Anlage der Unterkante (16) als eine flächige Anlage des zweiten Fixierschenkels (15) am Spannende (4) ergibt.

16. Federbandschelle nach einem der Ansprüche 2 bis 12, dadurch gekennzeichnet, daß das Halteelement (5) eine abgebogene Lasche (17) zum Hintergreifen des ersten Spannendes (3) aufweist

17. Federbandschelle nach Anspruch 16, dadurch gekennzeichnet, daß die Lasche als Abbiegung aus dem Halteelement (5) ausgebildet ist und daß, vorzugsweise, die Lasche nur mit einem geringen Winkel auf das Federband (2) hin abgebogen ist.

18. Federbandschelle nach einem der Ansprüche 2 bis 12 und 16 oder 17, dadurch gekennzeichnet, daß die Sollbruchstelle (18) als sich im wesentlichen über die gesamte Breite des Griffabschnittes (8) oder des zweiten Spannendes (4) erstreckende Einkerbung ausgebildet ist.

## Claims

1. A spring band clip comprising a spring band (2), two clamping ends (3, 4) standing proud of the spring band (2), and a holding element (5), which is constructed as a separate component which fixes the clamping ends (3, 4) and which at the same time ensures a spread-apart assembled state of the spring band clip (1), wherein the holding element comprises a holding section (6) and a pull-off section (7), wherein after pulling off or detaching the holding element (5) the spring band clip (1) springs into its substantially unstressed clamping state, wherein the pull-off section (7) of the holding element (5) has a grip section (8) for manually pulling off or detaching the holding element (5), and wherein the holding section (6) is constructed as an approximately U-shaped clamp with two fixing limbs (14, 15) for fitting over the clamping ends (3, 4) and fixing the latter in the assembled state, **characterised in that** the grip section (8) comprises an arched protrusion (9) which enables the grip section (8) to be gripped from within or which enables the grip section (8) to be gripped from below by means of at least one finger, and that one fixing limb (15) is seated with its lower edge (16) on the spring band (2) so that a predetermined fulcrum is formed when pulling off the holding element (5).

2. A spring band clip comprising a spring band (2), two clamping ends (3, 4) standing proud of the spring band (2), and a holding element (5), which is constructed in one piece with the spring band clip (1), which fixes the clamping ends (3, 4) and which at the same time ensures a spread-apart assembled state of the spring band clip (1), wherein the holding element comprises a holding section (6) and a pull-off section (7), wherein after pulling off or detaching the holding element (5) the spring band clip (1) springs into its substantially unstressed clamping state, wherein the pull-off section (7) of the holding element (5) has a grip section (8) for manually pulling off or detaching the holding element (5), and wherein the holding section (6) is attached to the second clamping end (4) and is bent from the latter towards the first clamping end (3), **characterised in that** the grip section (8) comprises an arched protrusion (9) which enables the grip section (8) to be gripped from within or which enables the grip section (8) to be gripped from below by means of at least one finger, and that a predetermined breaking point (18) is provided between the holding element (5) and the second clamping end (4).

3. A spring band clip according to claims 1 or 2, characterised in that in the assembled state of the spring band clip (1) the grip section (8) is disposed out of centre with respect to the clamping end or ends (3, 4) to be detached.

4. A spring band clip according to any one of claims 1 to 3, characterised in that the grip section (8) is constructed as a finger hoop which is adjacent to the clamping ends (3, 4) and which preferably runs tangentially and/or in the form of an arc towards the spring band (2).

5. A spring band clip according to any one of claims 1 to 4, characterised in that the arched protrusion (9) is substantially matched to the shape of a finger and extends at least over part of the length of the grip section (8).

6. A spring band clip according to any one of claims 1 to 5, characterised in that the grip section (8) comprises an arched protrusion (10) which extends substantially over the width of the grip section (8).

7. A spring band clip according to any one of claims 1 to 6, characterised in that the width of the grip section (8) greater than its thickness by a multiple thereof.

8. A spring band clip according to claim 7, characterised in that the width of the grip section (8) approximately corresponds to the width of the spring band (2).

9. A spring band clip according to any one of claims 1 to 8, characterised in that the grip section (8) comprises a folded-back portion (11) on at least one longitudinal side.

10. A spring band clip according to claim 9, characterised in that the folded-back portion (11) is provided at least in the region of the transition from the holding section (6) to the pull-off section (7).

11. A spring band clip according to any one of claims 1 to 10, characterised in that the grip section (8) cooperates with the spring band (2) so that the grip section (8) is fixed in the direction of the centre line (M) of the spring band clip (1).

12. A spring band clip according to any one of claims 1 to 11, characterised in that at least one opening (12) is provided in the spring band (2), into which opening a projection (13) which is provided on the grip section (8) fits in the assembled state.

13. A spring band clip according to any one of claim 1 and claims 3 to 12, characterised in that one of the two fixing limbs of the clamp is a first fixing limb (14) near the grip section (8) and the other fixing limb is a second fixing limb (15) distant from the grip section (8).

14. A spring band clip according to claim 13, characterised in that the first fixing limb (14) is disposed inclined at a slight angle (α) to the first clamping end (3), so that there is more of a two-dimensional contact rather than a linear contact of the first fixing limb (14) on the first clamping end (3).

15. A spring band clip according to claims 13 or 14, characterised in that the second fixing limb (15) is disposed at a slight angle (β) to the corresponding clamping end (4), so that there is more of a linear contact of the lower edge (16) rather than a two-dimensional contact of the second fixing limb (15) on the clamping end (4).

16. A spring band clip according to any one of claims 2 to 12, characterised in that the holding element (5) comprises a bent-off tab (17) for fitting behind the first clamping end (3).

17. A spring band clip according to claim 16, characterised in that the tab is formed as a bent-off portion of the holding element (5) and that the tab is preferably only bent at a slight angle towards the spring band (2).

18. A spring band clip according to any one of claims 2 to 12 and claims 16 or 17, characterised in that the predetermined breaking point (18) is formed as a notch which extends substantially over the entire width of the grip section (8) or of the second clamping end (4).

## Revendications

1. Collier de serrage comprenant une bride de ressort (2), deux extrémités de serrage (3, 4) s'écartant de la bride de ressort (2) et un élément de retenue (5) réalisé sous la forme d'un composant séparé, fixant les extrémités de serrage (3, 4) et garantissant en l'occurrence un état de montage élargi du collier de serrage (1), dans lequel l'élément de retenue présente une section de retenue (6) et une section de retrait (7), le collier de serrage (1) effectuant, après le retrait ou le desserrage de l'élément de retenue (5), un retour élastique dans son état de serrage essentiellement non serré, la section de retrait (7) de l'élément de retenue (5) présentant une section de préhension (8) pour le retrait, respectivement le desserrage manuel de l'élément de retenue (5) et la section de retenue (6) étant réalisée sous la forme d'un crochet approximativement en U comprenant deux branches de fixation (14, 15) pour surplomber et fixer les extrémités de serrage (3, 4) à l'état de montage caractérisé en ce que la section de préhension (8) présente un bombement (9) pour l'insertion d'au moins un doigt dans la section de préhension (8) ou pour la saisie de la section de préhension (8) par en-dessous à l'aide d'au moins un doigt et en ce qu'une branche de fixation (15) s'appuie avec son arête inférieure (16) sur la bride de ressort (2), si bien que l'on obtient un point d'appui prédéfini lors du retrait de l'élément de retenue (5).

2. Collier de serrage comprenant une bride de ressort (2), deux extrémités de serrage (3, 4) s'écartant de la bride de ressort (2) et un élément de retenue (5) réalisé en une seule pièce avec le collier de serrage (1), fixant les extrémités de serrage (3, 4) et garantissant en l'occurrence un état de montage élargi du collier de serrage (1), dans lequel l'élément de retenue présente une section de retenue (6) et une section de retrait (7), le collier de serrage (1) effectuant, après le retrait ou le desserrage de l'élément de retenue (5), un retour élastique dans son état de serrage essentiellement non serré, la section de retrait (7) de l'élément de retenue présentant une section de préhension (8) pour le retrait, respectivement le desserrage manuel de l'élément de retenue (5) et l'élément de retenue (5) étant relié avec la seconde extrémité de serrage (4) et étant cintré par rapport à cette dernière dans la direction orientée vers la première extrémité de serrage (3), caractérisé en ce que la section de préhension (8) présente un bombement (9) pour l'insertion dans la section d'au moins un doigt de préhension (8) ou pour la saisie de la section de préhension (8) par endessous à l'aide d'au moins un doigt et en ce qu'on prévoit entre l'élément de retenue (5) et la deuxième extrémité de serrage (4) un point destiné à la rupture (18).

3. Collier de serrage selon la revendication 1 ou 2, caractérisé en ce que la section de préhension (8), à l'état de montage du collier de serrage (1), est disposée en position excentrique par rapport à l'extrémité ou aux extrémités (3, 4) à relâcher.

4. Collier de serrage selon l'une quelconque des revendications 1 à 3, caractérisé en ce que la section de préhension (8) est réalisée sous la forme d'un étrier à doigt voisin des extrémités de serrage (3, 4), qui s'étend de préférence en position tangentielle et/ou en formant un arc par rapport à la bride de ressort (2).

5. Collier de serrage selon l'une quelconque des revendications 1 à 4, caractérisé en ce que le bombement (9) épouse essentiellement la forme d'un doigt et s'étend sur au moins une partie de la longueur de la section de préhension (8).

6. Collier de serrage selon l'une quelconque des revendications 1 à 5, caractérisé en ce que la section de préhension (8) présente un bombement (10) s'étendant essentiellement sur la largeur de la section de préhension (8).

7. Collier de serrage selon l'une quelconque des revendications 1 à 6, caractérisé en ce que la largeur de la section de préhension (8) représente un multiple de son épaisseur.

8. Collier de serrage selon la revendication 7, caractérisé en ce que la largeur de la section de préhension (8) correspond à peu près à la largeur de la bride de ressort (2).

9. Collier de serrage selon l'une quelconque des revendications 1 à 8, caractérisé en ce que la section de préhension (8) présente une arête vive (11) au moins sur un côté longitudinal.

10. Collier de serrage selon la revendication 9, caractérisé en ce que l'arête vive (11) est prévue au moins dans la zone de la transition de la section de retenue (6) à la section de retrait (7).

11. Collier de serrage selon l'une quelconque des revendications 1 à 10, caractérisé en ce que la section de préhension (8) coopère avec la bride de ressort (2) de telle sorte que la section de préhension (8) est fixé dans la direction de l'axe médian (M) du collier de serrage (1).

12. Collier de serrage selon l'une quelconque des revendications 1 à 11, caractérisé en ce qu'on prévoit au moins une ouverture (12) dans la bride de ressort (2), dans laquelle vient s'insérer, à l'état de montage, une saillie (13) prévue sur la section de préhension (8).

13. Collier de serrage selon l'une quelconque des revendications 1 et 3 à 12, caractérisé en ce qu'une des deux branches de fixation du crochet représente une première branche de fixation (14) proche de la section de préhension (8), l'autre branche de fixation représentant une deuxième branche de fixation (15) plus éloignée de la section de préhension (8).

14. Collier de serrage selon la revendication 13, caractérisé en ce que la première branche de fixation (14) est disposée en inclinaison en formant un petit angle (α) par rapport à la première extrémité de serrage (3), si bien que l'on obtient plutôt une application en nappe qu'une application en ligne de la première branche de fixation (14) sur la première extrémité de serrage (3).

15. Collier de serrage selon la revendication 13 ou 14, caractérisé en ce que la deuxième branche de fixation (15) est disposée en formant un petit angle (β) par rapport à l'extrémité de fixation correspondante (4), si bien que l'on obtient plutôt une application en ligne de l'arête inférieure (16) qu'une application en nappe de la deuxième branche de fixation (15) sur l'extrémité de serrage (4).

16. Collier de serrage selon l'une quelconque des revendications 2 à 12, caractérisé en ce que l'élément de retenue (5) présente une patte pliée (17) de telle sorte que la première extrémité de serrage (3) vienne la saisir par l'arrière.

17. Collier de serrage selon la revendication 16, caractérisé en ce que la patte est réalisée sous la forme d'un pliage à partir de l'élément de retenue (5) et en ce que de préférence la patte n'est pliée qu'en formant un petit angle en direction de la bride de ressort (2).

18. Collier de serrage selon l'une quelconque des revendications 2 à 12 et 16 ou 17, caractérisé en ce que le point destiné à la rupture (18) est réalisé sous la forme d'une encoche s'étendant essentiellement sur toute la largeur de la section de préhension (8) ou de la deuxième extrémité de serrage (4).
